# FASCICULE DE BREVET EUROPEEN

(11) **EP 1 354 745 B1**
(45) Date de publication et mention de la délivrance du brevet: **07.05.2008**
(21) Numéro de dépôt: 03290976.4
(22) Date de dépôt: 18.04.2003
(51) Int. Cl.: B60K 11/04, F28F 9/00, F16B 2/20

(54) **Dispositif de fixation d'un organe fonctionnel sur une pièce de structure de véhicule automobile et pièce de structure intégrant partiellement un tel dispositif**
Befestigungsvorrichtung eines funktionellen Organes auf einem Autoteil der Fahrzeugstruktur und Strukturteil, die zum Teil eine solche Vorrichtung integrieren
Fastening of a functional body on a part of a structure of a motor vehicle and part of structure integrating partially such a device

(30) Priorité: 18.04.2002 FR 0204888
(43) Date de publication de la demande: 22.10.2003
(73) Titulaire: COMPAGNIE PLASTIC OMNIUM, 69007 Lyon (FR)
(72) Inventeur: Carrier, Pascal, 69003 Lyon (FR); Cheron, Hugues, 01800 Meximieux (FR); Andre, Gérard, 01500 Amberieu en Bugey (FR)
(74) Mandataire: Remy, Vincent Noel Paul

(56) Documents cités:
- EP-A- 1 067 005
- DE-A- 2 734 753
- US-A- 4 416 503
- US-A- 4 614 321
- US-B1- 6 260 609

## Description

La présente invention concerne un ensemble d'une pièce de structure d'une face avant technique de véhicule automobile et d'un dispositif de fixation d'un ensemble de refroidissement sur cette pièce de structure ainsi qu'une face avant technique de véhicule automobile comportant un tel ensemble.

On sait que les pièces de structure avant des véhicules automobiles supportent un certain nombre d'organes fonctionnels. A cet effet, on connaît déjà dans l'état de la technique, notamment dans EP 1 067 005, un ensemble d'une pièce de structure d'une face avant technique de véhicule automobile et d'un dispositif de fixation d'un ensemble de refroidissement sur la pièce de structure de véhicule automobile conforme au préambule de la revendication 1.

Par exemple, une face avant technique est en général prévue pour supporter des optiques dans ses parties latérales et un ensemble de refroidissement dans sa partie centrale, c'est-à-dire un radiateur et/ou un groupe de ventilation et/ou un condensateur.

Cependant, la fixation d'un tel ensemble de refroidissement pose des problèmes de manipulation car les moyens de fixation habituellement mis en oeuvre requièrent une attention particulière de la part de l'opérateur et impliquent des mouvements fatigants. En résumé, l'opération de montage de l'ensemble de refroidissement est longue et coûteuse.

La présente invention vise à proposer une solution, de fixation qui, tout en étant fiable, offre une meilleure commodité de fixation de l'ensemble de refroidissement.

De manière plus spécifique, l'invention s'adresse en particulier au problème de la fixation à la partie supérieure d'une face avant technique d'un ensemble de refroidissement dont la positon selon la direction verticale, également désignée "position en Z", est imposée à la face avant technique par d'autres fixations.

Par exemple, si l'ensemble de refroidissement est fixé au bloc moteur ou est supporté par une traverse inférieure appartenant au châssis du véhicule, la face avant technique, rapportée sur le véhicule indépendamment de l'ensemble de refroidissement, peut offrir, grâce à l'invention, des moyens de fixation de la partie supérieure du radiateur.

On désignera "adaptation en Z" cette possibilité qu'offre le dispositif selon l'invention de prendre en compte une position verticale imposée de l'organe fonctionnel.

La présente invention a pour objet un ensemble d'une pièce de structure d'une faces avant technique de véhicule automobile et d'un dispositif de fixation d'un ensemble de refroidissement choisi parmi un radiateur, un groupe de ventilation et un condenseur sur la pièce de structure de véhicule automobile selon la revendication 1.

Grâce à l'invention, on peut assurer la fixation « en aveugle» de l'ensemble de refroidissement sur la pièce de structure, en laissant la pince ouverte dans sa position d'insertion partielle dans le logement de fixation et en engageant la cale de serrage dans la pince ouverte, jusqu'à ce que la cale de serrage, entièrement engagée dans la pince, exerce sur cette dernière une poussée qui l'insère complètement dans ledit logement de fixation. La pince se referme alors sur la cale de serrage, sous l'action du logement de fixation, et l'organe fonctionnel se retrouve fixé à la pièce structurelle.

De préférence, la pince s'insère dans le logement de fixation par translation selon une direction d'insertion et la cale pénètre par le passage dans la pince selon la même direction d'insertion, de sorte que l'engagement de la cale dans la pince et l'insertion de la pince s'effectuent dans un même mouvement continu de translation de l'organe fonctionnel.

Dans un mode de réalisation particulier de l'invention, les moyens de guidage sont des glissières.

Ces glissières peuvent prendre différentes formes, elles visent à faciliter l'insertion de la pince dans le logement de fixation. En outre, les glissières peuvent assurer un maintien de la pince par rapport au logement de fixation dans une direction perpendiculaire à la direction d'insertion. En d'autres termes, avec des glissières horizontales, on obtient un positionnement vertical et latéral de la pince dans le logement de fixation.

Pour faciliter l'insertion de la pince, un mode de réalisation particulier de l'invention prévoit que la pièce de structure comporte, en amont du logement de fixation dans la direction d'insertion de la pince, une zone d'approche réalisant un centrage de la pince.

Il peut s'agir par exemple d'une embouchure évasée du logement, inapte à exercer sur la pince une action suffisante pour la fermer, mais guidant ladite pince latéralement pour son insertion complète dans le logement.

Dans un mode de réalisation particulier de l'invention, le dispositif comporte des moyens de retenue de la pince insérée dans le logement de fixation.

Les moyens de retenue permettent une immobilisation de la pince en fin d'insertion dans le logement de fixation et ce, indépendamment de la présence ou non de la cale et de l'organe fonctionnel.

De tels moyens peuvent être par exemple des moyens d'encliquetage.

Conformément à l'invention, une cale est prévue pour être portée par l'organe fonctionnel et servir de prise à la pince.

Dans un mode de réalisation préféré, la pince et la cale sont agencées de manière que la pince peut se serrer en différents emplacements de la cale, permettant à la cale de prendre différentes positions par rapport à la pince dans une direction donnée.

Ce mode de réalisation fournit une solution au problème de l'adaptation en Z précédemment exposé, car l'organe fonctionnel a alors une position verticale imposée par son support et cette position verticale imposée détermine la hauteur de la cale au moment où elle se présente devant la pince pour être serrée. Bien que cette hauteur varie d'un véhicule à un autre, la pince se serre sur la cale et bloque sa position en Z.

Dans un mode de réalisation particulier, la cale sert de butée à l'organe fonctionnel dans une direction donnée, par exemple verticalement. A cet effet, la cale prend appui sur une portée de l'organe fonctionnel et l'empêche de se déplacer dans la direction correspondante.

La cale peut être intégrée à l'organe fonctionnel mais elle peut aussi être rapportée sur une prise dudit organe fonctionnel. Elle permet alors d'utiliser le dispositif de fixation pour toute géométrie d'organe fonctionnel, puisque la pince n'a pas à s'adapter à une forme particulière de prise.

Cette cale est par exemple un bloc de matière élastiquement déformable.

L'aptitude à la déformation de la cale a pour fonction de tolérer certains décalages de position de l'organe fonctionnel par rapport à la pièce de structure, lorsque ledit organe fonctionnel est porté par un autre support qui lui impose sa position. Cette possibilité d'adaptation concerne essentiellement la direction transversale, également désignée Y, selon laquelle la pince serre la cale, et n'est possible que pour des décalages dont l'ordre de grandeur est très inférieur à celui de l'adaptation en Z.

A titre d'exemple comparatif, les décalages tolérés en Y sont deux à trois fois moindres que l'adaptation en Z.

Avec un organe fonctionnel libre dans la direction Y, soit parce qu'il n'est porté que par le dispositif de fixation selon l'invention, soit parce que ses autres fixations lui laissent ce degré de liberté, l'organe fonctionnel se centre latéralement par serrage de la cale et l'aptitude à la déformation de cette dernière sert à compenser des dispersions dues aux tolérances de fabrication des différentes pièces mises en jeu.

La matière déformable constituant la cale est de préférence une matière càoutchoutique, qui permet, en plus de sa fonction de cale, d'absorber des vibrations émises par l'organe fonctionnel ou par la pièce de structure, en empêchant la transmission de ces vibrations de l'un vers l'autre.

Dans un mode de réalisation particulier de l'invention, la prise de l'organe fonctionnel est une broche et la cale comporte un orifice pour recevoir ladite broche.

En outre, il est avantageux que l'orifice de la cale soit une lumière dans laquelle la broche de fixation peut se déplacer lorsqu'elle est soumise à une poussée supérieure à un seuil prédéterminé, car l'organe fonctionnel peut alors se déplacer par rapport à la pièce de structure.

Cette disposition est intéressante pour le cas où le véhicule subit un impact qui déplace l'organe fonctionnel par rapport à l'avant du véhicule. Ayant, grâce à l'invention, une certaine liberté de recul par rapport à la pièce de structure à laquelle il est fixé, l'organe fonctionnel ou ses prises de fixation peuvent en effet échapper à la détérioration et, de même, éviter d'entraîner la détérioration de l'organe structurel.

La pince utilisée selon l'invention comporte avantageusement deux mâchoires qui peuvent s'écarter et se rapprocher l'une de l'autre, de préférence élastiquement.

La pince est ainsi élastiquement déformable et prend au repos sa position ouverte.

La pince comporte, dans un mode de réalisation particulier, des formes d'accrochage sur une de ses faces entrant en contact avec la cale. Ces formes sont de préférence orientées pour favoriser une direction de rétention de la cale, par exemple verticalement, de manière à permettre à ladite cale de remplir son rôle de butée pour l'organe fonctionnel, et ce quelque soit sa position dans un intervalle de tolérance large mais prédéterminé.

La présente invention a également pour objet une pièce de structure de véhicule automobile destinée à supporter un organe fonctionnel à l'aide d'un dispositif tel que décrit ci-dessus, caractérisée en ce qu'elle comprend le logement de fixation dudit dispositif.

L'invention a aussi pour objet une traverse supérieure d'un avant de véhicule automobile en tant que pièce de structure et une face avant technique de véhicule automobile caractérisée en ce qu'elle comporte une telle traverse.

Afin de faciliter la compréhension de l'invention, on va en décrire maintenant un mode de réalisation donné à titre d'exemple non limitatif, en référence aux dessins annexés dans lesquels :
- la figure 1 est une vue en perspective de trois quarts avant d'une face avant technique équipée d'un ensemble de refroidissement,
- la figure 2 est une vue du détail II de l'ensemble de refroidissement de la figure 1,
- la figure 3 est une vue analogue à la figure 2 montrant un bloc de caoutchouc engagé sur la broche du radiateur,
- la figure 4 est une vue en perspective d'une pince de fixation,
- la figure 5 est une vue de face d'un logement de fixation de la face avant technique,
- la figure 6 est une vue en perspective de dessous de la même zone de fixation munie de la pince,
- la figure 7 est une vue en perspective de la même zone de fixation recevant la cale et la broche de fixation du radiateur,

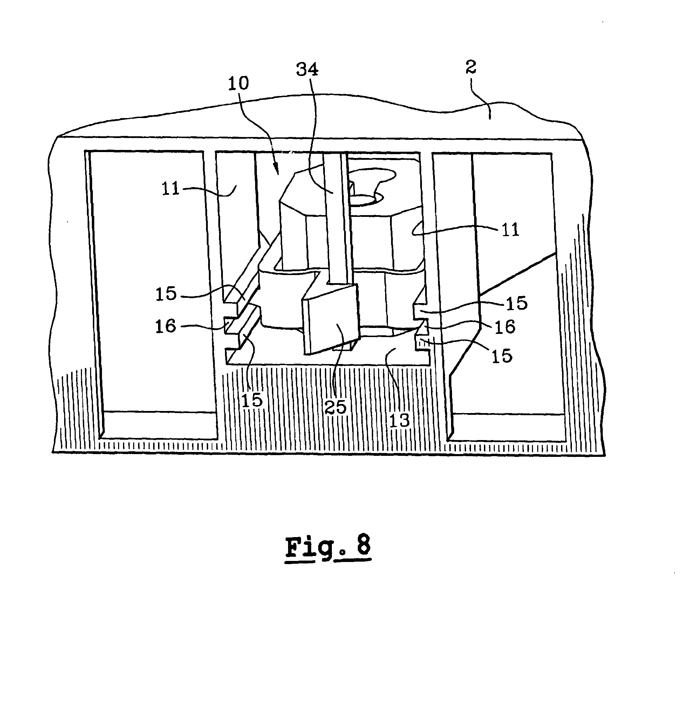

- la figure 8 est une vue en perspective de derrière de la même zone de fixation.

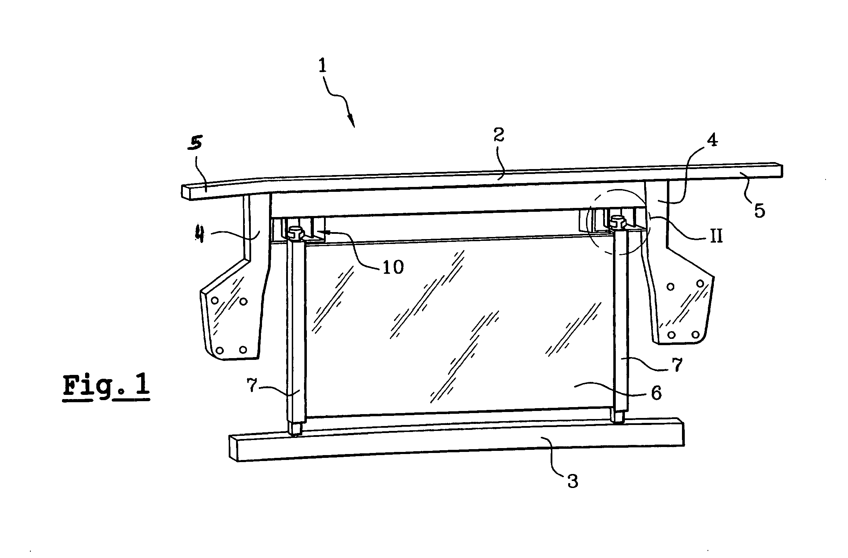

La face avant technique 1 représentée sur la figure 1 est une pièce de structure que l'on positionne à l'avant du véhicule, au-dessus de sa poutre basse 3, et qui comprend une traverse supérieure 2, des pièces support latérales 4 et des jambages latéraux 5.

Dans le cadre de la présente description, on s'intéresse uniquement à la traverse supérieure 2 de sorte que l'exemple qui va être décrit peut être considéré comme concernant toute pièce structurelle placée à l'avant d'un véhicule et comportant une traverse supérieure. La pièce structurelle peut d'ailleurs se limiter à cette traverse supérieure.

Un ensemble de refroidissement 6 est destiné à se loger à l'aplomb de la traverse supérieure 2, en étant supporté et positionné verticalement par appui sur la traverse inférieure 3, à l'aide de moyens de fixation (non représentés).

Cet ensemble de refroidissement 6 comprend ici uniquement un radiateur. En variante, il peut également inclure un condenseur et/ou un groupe de ventilation.

Le radiateur 6, supporté par la traverse inférieure 3, se fixe à la traverse supérieure 2 par des moyens spécifiques qui vont maintenant être décrits.

Le radiateur 6 est bordé par deux branches verticales 7 dont chacune se termine par une platine horizontale supérieure 8 (en position d'utilisation du radiateur) qui est perpendiculaire à la direction longitudinale de ladite branche.

En saillie de cette platine 8, la branche verticale 7 comporte une broche de fixation verticale 9, de forme générale cylindrique, à terminaison tronconique, qui offre une prise permettant d'assujettir le radiateur à la traverse supérieure.

De son côté, la traverse 2 est munie de deux logements de fixation 10 situés chacun en regard d'une broche de fixation 9 du radiateur 6.

Chaque logement de fixation 10 de la traverse est un compartiment de section transversale rectangulaire, délimité par deux parois latérales 11, une paroi supérieure 12 et une paroi inférieure 13.

Les deux parois latérales 11 sont parallèles entre elles mais se prolongent vers l'avant sous la forme de deux plans verticaux divergents 14 qui délimitent entre eux une zone d'approche située en amont du logement de fixation 10.

La paroi supérieure 12 du logement se prolonge jusqu'à la zone d'approche.

Les parois latérales divergentes 14 de la zone d'approche et celles 11, parallèles, du logement de fixation 10 sont pourvues chacune de deux nervures 15 définissant entre elles un rail de guidage 16.

Chaque rail de guidage 16 peut être formé d'un seul tenant avec la traverse 2, si celle-ci est obtenue par moulage de matière plastique, mais il peut également être rapporté sur les parois latérales du logement de fixation et de la zone d'approche.

Dans la zone d'approche, les deux rails de guidage 16 se rapprochent l'un de l'autre en direction du logement de fixation 10. Ils sont parallèles entre eux dans le logement de fixation.

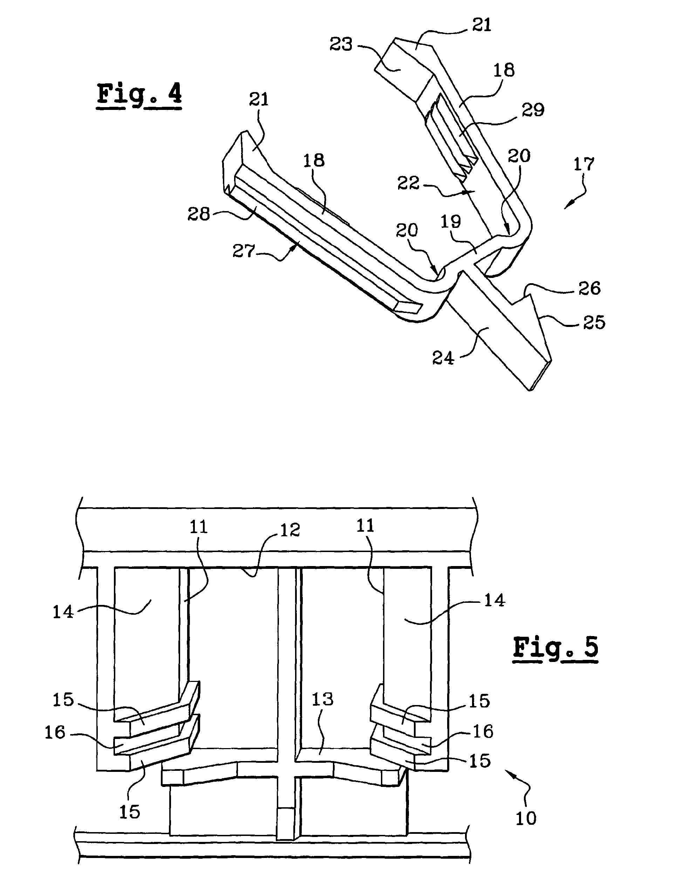

Le logement de fixation, muni de ces rails, est destiné à recevoir une pince 17 en matière souple à faible frottement, qui est représentée sur la figure 4.

Sur cette figure, la pince 17 est représentée au repos. Elle comporte deux mâchoires 18 symétriques l'une de l'autre par rapport à un plan médian, réunies par une bande de liaison 19 qui forme un angle avec chacune des deux mâchoires 18.

Le raccordement de cette bande de liaison 19 avec chaque mâchoire 18 est conformé en un dégagement arrondi 20 qui a pour fonction de constituer une charnière facilitant la fermeture de la pince par rapprochement mutuel de ses deux mâchoires 18.

L'extrémité libre de chaque mâchoire comporte un bord de retenue 21 en saillie de sa paroi intérieure 22. Ce bord de retenue 21 présente, du côté intérieur à la pince, une face plane 23 formant un angle obtus avec la face intérieure 22 de la mâchoire, refermant ainsi partiellement l'espace délimité par les deux mâchoires.

Ainsi, la pince au repos laisse libre un passage entre ses deux bords de retenue 21, tandis qu'en position fermée, ses deux bords de retenue 21 obstruent ce passage.

En outre, la pince 17 comporte une patte d'encliquetage 24 (moyen de retenue) sur la face de la bande de liaison 19 opposée aux mâchoires. Cette patte d'encliquetage 24 est formée par une languette munie d'un chanfrein 25 et d'un épaulement 26 par lequel la languette peut s'accrocher sur une portée pour retenir la pince axialement en fin d'insertion.

La patte d'encliquetage 24 et la portée d'encliquetage 34 constituent des moyens de retenue au sens de l'invention.

Les faces extérieures 27 des deux mâchoires 18 sont munies chacune d'une nervure 28 (moyen de guidage) qui est dimensionnée pour pouvoir s'engager dans le rail 16 de la zone d'approche et du logement de fixation de la traverse.

En outre, la distance entre les faces extérieures 27 des deux mâchoires, au niveau de la bande de liaison 19, est très légèrement inférieure à la distance séparant les rails 16 dans le logement de fixation 10.

Ainsi, on comprend que la pince 17 peut être engagée dans le logement de fixation 10, chaque nervure 28 d'une mâchoire coulissant dans le rail 16 correspondant de la zone d'approche, puis du logement de fixation.

En outre, la face intérieure 22 de chaque mâchoire comprend, dans sa région centrale, des formes d'accrochage 29 constituées ici par des cannelures parallèles aux dites mâchoires.

L'angle d'ouverture des deux mâchoires 18 au repos est légèrement supérieur à l'angle d'ouverture des parois latérales divergentes 14 de la zone d'approche.

Ainsi, la pince 17 peut être positionnée dans la zone d'approche, dans laquelle elle est retenue soit par frottement de la face extérieure 27 des mâchoires sur les rails 16, du fait de son élasticité, soit grâce à un léger relief (non visible sur le dessin) formé au fond de l'un des rails 16, ou des deux rails, à l'embouchure de la zone d'approche, ce relief formant un point de résistance que la pince franchit en force lors de son insertion dans la zone d'approche.

Ainsi disposée, la pince 17 conserve sa position ouverte. Elle est considérée comme partiellement insérée dans le logement de fixation 10.

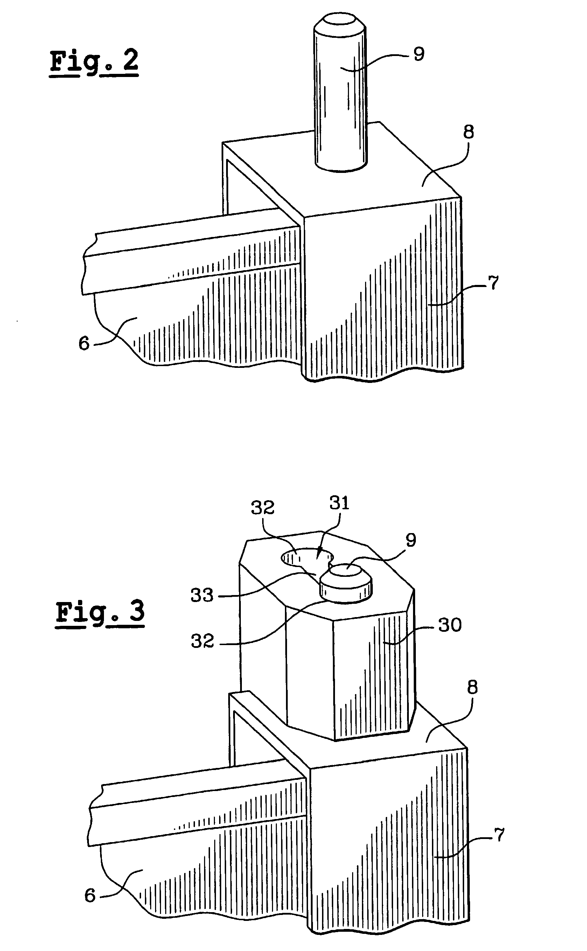

Comme on le voit sur la figure 3, la broche de fixation 9 du radiateur 6 reçoit une cale constituée par un bloc de caoutchouc 30 sensiblement cylindrique à base octogonale. Ce bloc de caoutchouc 30 est percé axialement d'une lumière traversante 31 dont la section transversale est sensiblement oblongue, avec des extrémités circulaires 32 sensiblement de même diamètre que la broche de fixation 9 du radiateur et une zone de raccordement rectangulaire 33 de largeur plus petite que le diamètre des extrémités circulaires 32.

Cette section particulière de la lumière 31 a pour conséquence que le bloc de caoutchouc 30 retient la broche de fixation 9 dans l'une ou l'autre des extrémités cylindriques 32 de la lumière et s'oppose à son passage dans la zone de raccordement 33. En d'autres termes, seule une force supérieure à un certain seuil peut forcer la broche de fixation 9 à quitter l'extrémité cylindrique 32 dans laquelle elle se trouve.

On peut noter que la symétrie de la lumière décrite ici n'est pas indispensable à l'obtention de l'effet recherché, comme on le verra ultérieurement. Cette symétrie présente cependant un intérêt pratique quant à la fabrication de la cale et à sa mise en place, sans orientation particulière, sur la broche du radiateur.

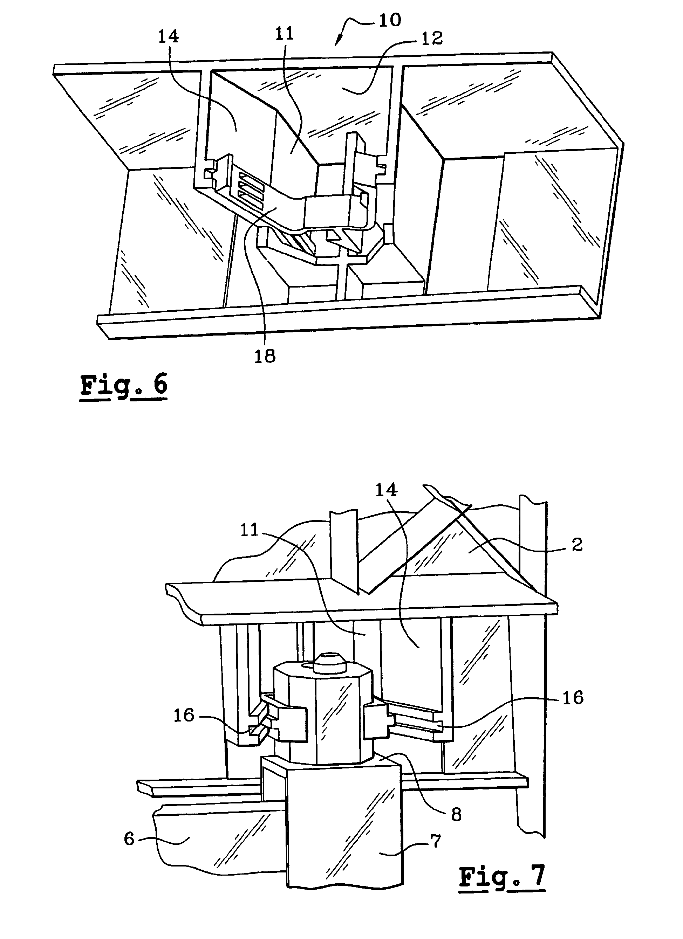

Revenant à la figure 6, on voit que la pince 17 ouverte logée dans la zone d'approche peut recevoir la cale 30 engagée sur la broche de fixation 9 du radiateur.

Le radiateur 6 étant présenté devant la face avant technique 1 dans la position représentée sur la figure 1, on fait subir à la partie supérieure du radiateur une translation en direction de la face avant technique selon la direction longitudinale du véhicule.

Cette translation peut être parfaite, au sens où le radiateur est déplacé parallèlement à lui-même selon la direction X, ou approchée, si le radiateur est préalablement fixé incliné sur la poutre basse, qui le supporte, et subit une rotation le ramenant en position verticale sous la traverse supérieure, la partie supérieure du radiateur ayant alors un mouvement assimilable à une translation.

Les deux cales 30 portées par le radiateur 6 s'insèrent alors entre les mâchoires 18 des pinces ouvertes.

Si le radiateur est libre transversalement, soit parce qu'il n'est pas encore bloqué latéralement sur la poutre basse, soit parce que ses fixations sur la poutre basse lui laissent un degré de liberté dans la direction transversale, les cales centrent le radiateur par rapport à la traverse supérieure.

Si, en revanche, la position latérale du radiateur est imposée par sa fixation sur la poutre basse, les cales se déforment pour absorber le léger décalage existant dans la limite des intervalles de tolérance, entre cette position imposée et l'emplacement des logements.

Dans ces deux hypothèses, les cales se déforment de toutes façons pour absorber le décalage de distance entre les deux logements sur la traverse et les deux broches sur le radiateur.

Chaque cale 30 arrive alors en butée contre la bande de liaison 19 de la pince correspondante.

En poursuivant le mouvement de translation du radiateur, on exerce une force sur les bandes de liaison 19 des pinces, ce qui provoque le coulissement de ces dernières le long des rails 16 et l'insertion des pinces dans les logements de fixation 10.

Simultanément, les mâchoires 18 des pinces, contraintes par les parois latérales 11 des logements de fixation 10, se referment sur les blocs de caoutchouc 30 jusqu'à atteindre la position représentée à la figure 7, dans laquelle on voit que les deux mâchoires 18 de chaque pince sont devenues parallèles entre elles et que leurs extrémités 21, refermées sur le bloc de caoutchouc 30, l'empêchent de se retirer.

Au fond du logement de fixation 10, la patte d'encliquetage 24 de chaque pince 17 rencontre une portée d'encliquetage 34, qui est ici constituée par une barre verticale reliant les parois inférieure 13 et supérieure 12 du logement de fixation 10.

Grâce à son chanfrein 25, la languette 24 commence par s'écarter de la barre verticale 34. En arrivant en position de fin de course, le chanfrein 25 franchit la barre verticale et l'épaulement 26 de la languette vient s'appliquer contre la barre verticale 34, réalisant ainsi l'encliquetage de la pince dans le logement.

A ce stade, on constate qu'il est avantageux que la section octogonale du bloc de caoutchouc 30 corresponde sensiblement à la section intérieure de la pince 17 en position fermée, c'est-à-dire lorsque ses mâchoires 18 sont parallèles entre elles.

Les cannelures d'accrochage 29 des parois intérieures 22 des mâchoires pénètrent dans les parois en regard du bloc de caoutchouc 30 et immobilisent ce dernier verticalement, la pince 17 étant elle-même immobilisée verticalement sur la traverse 2 grâce aux rails 16.

Ainsi, chaque bloc de caoutchouc est immobilisé dans la traverse, dans les conditions suivantes :
- en X, il est positionné par butée des pinces au fond des logements et bloqué dans cette position,
- en Y, il est positionné si les fixations à la poutre basse le permettent, comme précédemment expliqué, et il est bloqué dans cette position,
- en Z, il est seulement bloqué, le positionnement étant imposé par la poutre basse. Ce blocage résulte de l'appui des cales 30 sur les platines 8.

Les cales en caoutchouc 30 assurent donc la retenue du radiateur 6 sur la traverse 2 avec un positionnement longitudinal précis, tout en procurant une isolation aux vibrations.

On voit que la fixation du radiateur sur la traverse s'effectue de manière simple et "en aveugle", c'est-à-dire sans que l'opérateur n'ait à rechercher de centrage préalable ni à manoeuvrer un quelconque organe de verrouillage, ce verrouillage étant automatique par simple poussée sur le radiateur.

On voit également que cette fixation tient compte d'une position verticale du radiateur imposée par la poutre basse qui est extérieure à la face avant technique. Cette adaptation en Z est rendue possible par la forme cylindrique de la cale, qui permet à la pince de se serrer sur la cale quelque soit la hauteur à laquelle cette dernière se présente.

Le radiateur ainsi positionné sur la traverse supérieure peut encore subir un recul sans détérioration, par exemple lors d'un choc frontal à faible énergie.

Cette possibilité résulte de la forme de la lumière 31 de chaque cale 30 qui autorise, moyennant une poussée suffisante, la broche de fixation 9 à quitter l'extrémité 32 de la lumière.

Il suffit en effet de placer la cale 30 sur la broche 9 de manière que cette dernière se trouve dans l'extrémité avant 32 de la lumière (la plus éloignée de la traverse au moment du montage du radiateur) pour qu'ultérieurement, la broche de fixation 9 puisse, en cas de choc, vaincre les forces de frottement s'opposant à son déplacement dans la lumière et se déplacer jusqu'à l'extrémité arrière de la lumière.

La nature et la dureté du caoutchouc constituant la cale, les dimensions précises de la lumière et de la broche ainsi que l'effort de serrage de la pince sur la cale sont déterminés par la force minimale imposée par le cahier des charges du constructeur en matière de choc frontal.

De même, la longueur de la section transversale de la lumière détermine la course du recul sans détérioration du radiateur.

Au-delà de cette course, la pince 17 se détruit mais elle peut être facilement remplacée et à moindre frais.

II est bien entendu que le mode de réalisation qui vient d'être décrit ne présente aucun caractère limitatif et qu'il pourra recevoir des modifications pourvu que celles-ci ne sortent pas du cadre de l'invention défini par les revendications ci-jointes.

En particulier, les rails de guidage décrits sur les logements peuvent être portés par les pinces, tandis que les logements peuvent comporter des nervures.

## Revendications

1. Ensemble d'une pièce de structure (2) d'une face avant technique de véhicule automobile et d'un dispositif de fixation d'un ensemble de refroidissement (6) choisi parmi un radiateur, un groupe de ventilation et un condensateur, sur cette pièce de structure (2), le dispositif de fixation comportant une cale de serrage (30) destinée à être portée par l'ensemble de refroidissement (6) **caractérisé en ce que** le dispositif de fixation comporte
- une pince (17) apte à se serrer sur la cale (30) et pouvant prendre une position ouverte dans laquelle elle libère la cale (30) et une position fermée dans laquelle elle la retient,
- un logement de fixation (10) porté par la pièce de structure (2), apte à contenir la pince (17),
- des moyens de guidage (16, 28) de la pince (17) dans le logement de fixation (10), permettant d'insérer partiellement la pince (17) dans le logement de fixation (10) et de la laisser ainsi en position ouverte, puis de poursuivre l'insertion de la pince (17) dans ledit logement de fixation (10), les moyens de guidage (16,28) agissant alors sur la pince (17) pour la mettre en position fermée.

2. Ensemble selon la revendication 1, dans lequel la pince (17) s'insère dans le logement de fixation (10) par translation selon une direction d'insertion et en ce que la cale (30) pénètre par le passage dans la pince (17) selon la même direction d'insertion.

3. Ensemble selon l'une quelconque des revendications 1 et 2, dans lequel les moyens de guidage sont des glissières (16, 28).

4. Ensemble selon l'une quelconque des revendications 1 à 3, comportant des moyens de retenue (24, 34) permettant l'immobilisation de la pince (17) en fin d'insertion dans le logement de fixation (10).

5. Ensemble selon la revendication 4, dans lequel les moyens de retenue sont des moyens d'encliquetage (24, 34).

6. Ensemble selon l'une quelconque des revendications 4 et 5 dans lequel la pince (17) comporte deux mâchoires (18) réunies par une bande de liaison (19) dont la face opposée aux mâchoires (18) porte les moyens de retenue (24).

7. Ensemble selon l'une quelconque des revendications 1 à 6, dans lequel la pince (17) et la cale (30) sont agencées de manière que la pince (17) peut se serrer en différents emplacements de la cale (30) permettant à la cale (30) de prendre différentes positions par rapport à la pince (17) dans une direction donnée.

8. Ensemble selon l'une quelconque des revendications 1 à 7, dans lequel la cale (30) sert de butée à l'ensemble de refroidissement (6) dans une direction donnée, par exemple verticalement.

9. Ensemble selon l'une quelconque des revendications 1 à 8, dans lequel la cale (30) est un bloc de matière élastique déformable.

10. Ensemble selon la revendication 9, dans lequel la matière élastiquement déformable constituant la cale (20) est de préférence une matière caoutchoutique.

11. Ensemble selon l'une quelconque des revendications 1 à 10, dans lequel la cale (30) comporte un orifice (31) pour recevoir une broche de fixation (9) solidaire de l'ensemble de refroidissement (6).

12. Ensemble selon la revendication 11, dans lequel l'orifice (31) de la cale (30) est une lumière (31) dans laquelle la broche de fixation (9) peut se déplacer lorsqu'elle est soumise à une poussée supérieure à un seuil prédéterminé.

13. Ensemble selon l'une quelconque des revendications 1 à 12, dans lequel la pince (17) est élastiquement déformable et prend au repos sa position ouverte.

14. Ensemble selon l'une quelconque des revendications 1 à 13, dans lequel la pince (17) comporte des formes d'accrochage (29) sur une de ses faces (22) entrant en contact avec la cale (30).

15. Ensemble selon l'une quelconque des revendications 1 à 14 dans lequel la pièce de structure (2) est une traverse supérieure (2) d'un avant de véhicule automobile.

16. Ensemble selon l'une quelconque des revendications 1 à 15, dans lequel la pièce de structure (2) est une traverse supérieure (2) d'une face avant technique (1) de véhicule automobile.

17. Ensemble selon l'une quelconque des revendications 1 à 16, dans lequel la pièce de structure (2) comporte, en amont du logement de fixation (10) dans la direction d'insertion de la pince (17), une zone d'approche (14) réalisant un centrage de la pince (17).

18. Face avant technique de véhicule automobile **caractérisée en ce qu'**elle comporte un ensemble selon l'une quelconque des revendications 1 à 17.

## Claims

1. An assembly comprising a structural part (2) of an equipment front face of a motor vehicle and a device for fixing a cooling assembly (6), selected from a radiator, a fan unit and a condenser, on said structural part (2), the device comprising a clamping spacer (30) designed to be carried by the cooling assembly (6), **characterized in that** the device comprises :
- a clip (17) suitable for clamping onto the spacer (30) and capable of occupying an open position in which it frees the spacer (30) and a closed position in which it holds it,
- a fixing housing (10) carried by the structural part (2), suitable for containing the clip (17),
- guide means (16, 28) for guiding the clip (17) in the fixing housing (10), enabling the clip (17) to be inserted in part in the fixing housing (10) and thus enabling it to be left in the open position, and subsequently enabling insertion of the clip (17) into said fixing housing (10) to be continued with the guide means (16, 28) then acting on the clip (17) to put into its closed position.

2. An assembly according to claim 1, in which the clip (17) is inserted into the fixing housing (10) by moving in translation along an insertion direction, and in which the spacer (30) penetrates through the passage in the clip (17) in the same insertion direction.

3. An assembly according to claim 1 or 2, in which the guide means are slideways (16, 28).

4. An assembly according to any one of claims 1 to 3, including retaining means (24, 34) enabling the clip (17) to be prevented from moving at the end of its insertion stroke into the fixing housing (10).

5. An assembly according to claim 4, in which the retention means are snap-fastening means (24, 34).

6. An assembly according to claim 4 or 5, in which the clip (17) comprises two jaws (18) united by a connection strip (19) whose face opposite from the jaws (18) carries the retaining means (24).

7. An assembly according to any one of claims 1 to 6, in which the clip (17) and the spacer (30) are arranged in such a manner that the clip (17) can clamp onto the spacer (30) at different locations, thus enabling the spacer (30) to occupy different positions relative to the clip (17) in a given direction.

8. An assembly according to any one of claim 1 to 7, in which the spacer (30) serves as an abutment for the cooling assembly (6) in a given direction, e.g. vertically.

9. An assembly according to any one of claims 1 to 8, in which the spacer (30) is a block of elastically deformable material.

10. An assembly according to claim 9, in which the elastically deformable material constituting the spacer (30) is preferably a rubbery material.

11. An assembly according to any one of claims 1 to 10, in which the spacer (30) has an orifice (31) for receiving a fixing pin (9) secured to the cooling assembly (6).

12. An assembly according to claim 11, in which the orifice (31) in the spacer (30) is a slot (31) in which the fixing pin (9) can move when it is subjected to thrust greater than a predetermined threshold.

13. An assembly according to any one of claims 1 to 12, in which the clip (17) is elastically deformable and occupies its open position when at rest.

14. An assembly according to any one of claims 1 to 13, in which the clip (17) includes engagement shapes (29) on one of its faces (22) that comes into contact with the spacer (30).

15. An assembly according to any one of claims 1 to 14, in which the structural part (2) is a top cross-member (2) at the front of a motor vehicle.

16. An assembly according to any one of claims 1 to 15, in which the structural part (2) is a top cross-member (2) of an equipment front face (1) of a motor vehicle.

17. An assembly according to any one of claims 1 to 16, in which the structural part (2) has an approach zone (14) upstream from the fixing housing (10) in the insertion direction of the clip (17), thus enabling the clip (17) to be centered.

18. An equipment front face for a motor vehicle **characterized in that** it includes a cross-member according to any one of claim 1 to 17.

## Patentansprüche

1. Anordnung eines Strukturteils (2) einer vorderen technischen Fläche eines Kraftfahrzeugs und einer Vorrichtung zum Befestigen einer Kühleinheit (6), bei der es sich um einen Kühler, eine Gebläsegruppe und einen Kondensator handeln kann, an diesem Strukturteil (2), wobei die Befestigungsvorrichtung einen Spannkeil (30) aufweist, der dazu bestimmt ist, von der Kühleinheit (6) getragen zu werden, **dadurch gekennzeichnet, dass** die Befestigungsvorrichtung aufweist:
- eine Klemme (17), die den Keil (30) zu umspannen vermag und eine geöffnete Position, in der sie den Keil (30) freigibt, und eine geschlossene Position, in der sie ihn hält, einnehmen kann,
- eine von dem Strukturteil (2) getragene Befestigungsaufnahme (10), die die Klemme (17) aufzunehmen vermag,
- Mittel (16, 28) zum Führen der Klemme (17) in der Befestigungsaufnahme (10), die es ermöglichen, die Klemme (17) teilweise in die Befestigungsaufnahme (10) einzuführen und sie auf diese Weise in der geöffneten Position zu lassen, dann das Einführen der Klemme (17) in die Befestigungsaufnahme (10) fortzusetzen, wobei die Führungsmittel (16, 28) nun auf die Klemme (17) einwirken, um sie in die geschlossene Position zu bringen.

2. Anordnung nach Anspruch 1, in der die Klemme (17) in die Befestigungsaufnahme (10) durch Verschieben in einer Einschubrichtung eingeführt wird und der Keil (30) in derselben Einschubrichtung durch den Durchgang in der Klemme (17) dringt.

3. Anordnung nach einem der Ansprüche 1 oder 2, in der es sich bei den Führungsmitteln um Gleitschienen (16, 28) handelt.

4. Anordnung nach einem der Ansprüche 1 bis 3, die Haltemittel (24, 34) aufweist, die das Fixieren der Klemme (17) nach dem Einführen in der Befestigungsaufnahme (10) ermöglichen.

5. Anordnung nach Anspruch 4, in der es sich bei den Haltemitteln um Mittel zum Einrasten (24, 34) handelt.

6. Anordnung nach einem der Ansprüche 4 oder 5, in der die Klemme (17) zwei Backen (18) aufweist, die durch ein Verbindungsstück (19) verbunden sind, dessen den Backen (18) entgegengesetzte Seite die Haltemittel (24) trägt.

7. Anordnung nach einem der Ansprüche 1 bis 6, in der die Klemme (17) und der Keil (30) derart angeordnet sind, dass sich die Klemme (17) an verschiedenen Stellen des Keils (30) schließen kann, wobei sie es dem Keil (30) ermöglicht, in einer gegebenen Richtung verschiedene Positionen bezüglich der Klemme (17) einzunehmen.

8. Anordnung nach einem der Ansprüche 1 bis 7, in der der Keil (30) in einer gegebenen Richtung, zum Beispiel vertikal, als Anschlag für die Kühleinheit (6) dient.

9. Anordnung nach einem der Ansprüche 1 bis 8, in der es sich bei dem Keil (30) um einen Block aus elastisch verformbarem Material handelt.

10. Anordnung nach Anspruch 9, bei der das elastisch verformbare Material, das den Keil (30) bildet, vorzugsweise ein kautschukartiges Material ist.

11. Anordnung nach einem der Ansprüche 1 bis 10, in der der Keil (30) eine Öffnung (31) aufweist, um einen Befestigungsstift (9) aufzunehmen, der mit der Kühleinheit (6) fest verbunden ist.

12. Anordnung nach Anspruch 11, in der die Öffnung (31) des Keils (30) ein Schlitzloch (31) ist, in dem sich der Befestigungsstift (9) verlagern kann, wenn er einer Schubkraft ausgesetzt ist, die eine vordefinierte Schwelle überschreitet.

13. Anordnung nach einem der Ansprüche 1 bis 12, in der die Klemme (17) elastisch verformbar ist und ihre geöffnete Position im Ruhezustand einnimmt.

14. Anordnung nach einem der Ansprüche 1 bis 13, in der die Klemme (17) Einhakungsformen (29) auf einer ihrer Seiten (22) aufweist, die mit dem Keil (30) in Kontakt kommen.

15. Anordnung nach einem der Ansprüche 1 bis 14, in der das Strukturteil (2) ein oberer Querträger (2) einer Vorderseite eines Kraftfahrzeugs ist.

16. Anordnung nach einem der Ansprüche 1 bis 15, in der das Strukturteil (2) ein oberer Querträger (2) einer vorderen technischen Fläche (1) eines Kraftfahrzeugs ist.

17. Anordnung nach einem der Ansprüche 1 bis 16, in der das Strukturteil (2) in der Einführrichtung der Klemme (17) vor der Befestigungsaufnahme (10) einen Annäherungsbereich (14) aufweist, der die Zentrierung der Klemme (17) bewirkt.

18. Vordere technische Fläche eines Kraftfahrzeugs, **dadurch gekennzeichnet, dass** sie eine Anordnung nach einem der Ansprüche 1 bis 17 aufweist.
